# EUROPÄISCHE PATENTSCHRIFT

(11) **EP 2 700 932 B1**
(45) Veröffentlichungstag und Bekanntmachung des Hinweises auf die Patenterteilung: **16.08.2017**
(21) Anmeldenummer: 13180987.3
(22) Anmeldetag: 20.08.2013
(51) Int. Cl.: G01N 17/04

(54) **Korrosionssonde für einen Kessel oder eines Wärmetauscher**
Corrosion probe for a boiler or a heat exchanger
Sonde de corrosion pour une chaudière ou un échangeur de chaleur

(30) Priorität: 23.08.2012 DE 102012107792
(43) Veröffentlichungstag der Anmeldung: 26.02.2014
(73) Patentinhaber: Epple, Bernd, 64395 Brensbach (DE)
(72) Erfinder: Epple, Bernd, 64395 Brensbach (DE)
(74) Vertreter: Rüger, Barthelt & Abel

(56) Entgegenhaltungen:
- EP-A2- 0 174 768
- CN-A- 102 128 784
- US-A- 3 980 542
- US-A- 4 575 678
- US-A1- 2002 117 401
- AYSHA SALMAN ET AL: "Corrosion detection using array of planar Cu electrodes", RESEARCH AND DEVELOPMENT (SCORED), 2009 IEEE STUDENT CONFERENCE ON, IEEE, PISCATAWAY, NJ, USA, 16. November 2009 (2009-11-16), Seiten 307-310, XP031655628, ISBN: 978-1-4244-5186-9

## Beschreibung

Die Erfindung betrifft eine Vorrichtung zur Messung der Korrosion bzw. der Korrosionsrate, die einen Kessel oder einen Wärmetauscher, beispielsweise einen Kessel für die Dampferzeugung, sowie eine an einem Wandabschnitt des Kessels oder des Wärmetauschers befestigte Korrosionssonde umfasst.

Die Korrosionssonde dient dazu, die Korrosion bzw. die Korrosionsrate des Wandabschnitts bzw. der Wand des Kessels oder des Wärmetauschers zu bestimmen. Sie weist hierfür drei Elektroden auf. Die Elektroden sind mit einer Auswerteeinheit verbunden. Mittels der Methode der Messung des linearen Polarisationswiderstandes (LPR) wird die Korrosionsrate und/oder die Korrosion ermittelt.

Eine Korrosionssonde ist zum Beispiel aus EP 2 325 621 A1 bekannt. Die Korrosionssonde besteht aus drei nebeneinander angeordneten Elektroden, die gemeinsam eine kreisrunde Platte bilden. Die Korrosionssonde befindet sich an der Spitze einer Lanze und kann zur Korrosionsbestimmung mithilfe der Lanze in einen Kessel eingeführt werden. Innerhalb der Lanze verlaufen Kühlkanäle, um die Elektroden, die der Hitze im Kesselinneren ausgesetzt sind, zu kühlen.

Derartige Korrosionssonden sind aufwendig. Die Elektroden müssen über in der Lanze verlaufende Kühlkanäle permanent an eine externe Kühlung angeschlossen sein, um eine ausreichende Kühlung sicherzustellen. Die Kühlkanäle benötigen außerdem viel Platz, was wiederum das Anordnen der Lanze in einer Öffnung im Kesselwandabschnitt in das Kesselinnere erschwert. Außerdem ist es in der Regel erforderlich, die Rohre im Kesselwandabschnitt um die für die Lanze vorgesehene Öffnung herum zu führen.

CN 102128784 A beschreibt eine Korrosionssonde mit einem zylindrischen Träger, der mehrere nebeneinander angeordnete Elektroden aufweist. Die Elektroden sind jeweils an einer Kante an einer Stirnfläche des zylindrischen Trägers zugänglich und können dort in Kontakt mit dem korrosiven Medium gebracht werden.

US 2002/0117401 A1 beschreibt eine Vorrichtung aufweisend einen Wandabschnitt eines Kessels und eine Korrosionssonde nach dem Oberbegriff des Patentanspruches 1. Die stabförmigen Elektroden werden in jeweils ein Loch, das in einen Verbindungssteg zwischen zwei Rohren eingebracht sind. Das elektrochemische Rauschen wird ausgewertet, um die Korrosion zu ermitteln.

Ausgehend hiervon kann es deswegen als eine Aufgabe der vorliegenden Erfindung angesehen werden, eine verbesserte Vorrichtung zu schaffen, die insbesondere einfach und kostengünstig an einem Kesselwandabschnitt angeordnet werden kann.

Diese Aufgabe wird durch eine Vorrichtung aus Kesselwandabschnitt und Korrosionssonde gemäß Patentanspruch 1 und die Verwendung der Vorrichtung und der Korrosionssonde mit den Merkmalen des Patentanspruches 12 gelöst.

Die Korrosionssonde weist eine Sensoranordnung mit mehreren und wenigstens drei Elektroden auf. Die Elektroden gelangen bei der Messung in Kontakt mit dem korrosiven Medium innerhalb des Kessels. Die Elektroden sind als ebene Platten mit einer rechteckigen Elektrodenfläche ausgeführt und nebeneinander in einem elektrisch isolierenden Trägerteil angeordnet. Das Trägerteil ist dazu eingerichtet und vorgesehen in einem Zwischenraum zwischen zwei benachbarten Rohren des Kesselwandabschnitts angeordnet zu werden. Die Breite des Trägerteils ist hierfür insbesondere kleiner als der Abstand zwischen zwei benachbarten Rohren des zugeordneten Kesselwandabschnitts. Die Elektroden können in Erstreckungsrichtung der Rohre nebeneinander angeordnet sein. Insbesondere ist in einem Verbindungssteg zwischen zwei benachbarten Rohren des Kesselwandabschnitts eine Aussparung vorhanden, in der das Trägerteil angeordnet und befestigt ist. Durch die Rohre des Kesselwandabschnitts strömt beim Betrieb des Kessels ein zu erhitzendes Medium, das mithin Wärme von der Kesselwand abführt. Dadurch, dass das Trägerteil in seiner Gebrauchslage zwischen zwei Rohren des Kesselwandabschnitts am oder im Verbindungssteg angeordnet ist, erfolgt die Kühlung der Elektroden über das durch die Rohre strömende Medium. Insbesondere kann dabei die Korrosionssonde vollständig frei von Kühlkanälen ausgeführt sein. Eine separate Kühlung der Korrosionssonde ist mithin nicht erforderlich.

Das Trägerteil besteht bei einer Ausführungsform aus einem keramischen Material, insbesondere aus einer Aluminiumoxidkeramik. Dieses Material hat nicht nur eine gute elektrisch isolierende Eigenschaft, sondern besitzt auch eine große Hitzebeständigkeit und Thermoschockresistenz.

Die erfindungsgemäße Korrosionssonde benötigt nur einen sehr geringen Bauraum, der im Wesentlichen durch die Größe der dem korrosiven Medium zugewandten Elektrodenflächen der Elektroden bestimmt ist. Die Elektroden können beispielsweise in einer Reihe nebeneinander angeordnet sein, so dass sie sehr einfach parallel zur Erstreckungsrichtung der Rohre in den Zwischenraum eingesetzt werden können, ohne dass aufwendige bauliche Maßnahmen am Kesselwandabschnitt erforderlich sind. Dort kann insbesondere lediglich eine Aussparung in einem Verbindungssteg zwischen zwei benachbarten Rohren zur Aufnahme des Trägerteils vorhanden sein. Das Trägerteil lässt sich beispielsweise durch eine stoffschlüssige und/oder kraftschlüssig und/oder formschlüssig Verbindung sehr einfach in die Aussparung am Verbindungssteg einsetzen und insbesondere gasdicht mit dem Verbindungssteg verbinden. Die aus dem Trägerteil mit den Elektroden gebildete Sensoreinrichtung der Korrosionssonde kann bei einem Ausführungsbeispiel den Verbindungssteg des Kesselwandabschnitts im Bereich der Aussparung ersetzen. Alternativ kann die Aussparung auch als Vertiefung ausgeführt sein, die den Verbindungssteg nicht vollständig durchbricht, so dass die Gasdichtheit durch die Aussparung nicht beeinträchtigt ist.

Vorzugsweise sind zwei benachbarte Elektroden durch jeweils einen dazwischen verlaufenden Steg des Trägerteils elektrisch voneinander isoliert. Beispielsweise kann das Trägerteil für jede Elektrode einen separaten Aufnahmebereich aufweisen. Zusätzliche isolierende Bauteile zwischen den Elektroden können entfallen.

Die dem korrosiven Medium zugeordnete Elektrodenfläche der Elektroden ist stufen- und kantenlos eben ausgeführt. Die Elektrodenflächen der Elektroden der Sensoranordnung der Korrosionssonde können bei einem bevorzugten Ausführungsbeispiel in einer Ebene liegen. Diese Ebene kann mit der Ebene übereinstimmen, in der sich die Außenfläche des Trägerteils, die dem korrosiven Medium zugewandt ist, befindet. Bei einer derartigen Ausführung kann eine sehr flach bauende Korrosionssonde erzielt werden, die nicht oder nur wenig von einem Verbindungssteg zwischen zwei benachbarten Rohren in Richtung des Kesselinneren von dem Kesselwandabschnitt wegragt. Zumindest steht die Korrosionssonde in ihrer Gebrauchslage nicht aus dem zwischen zwei benachbarten Rohren begrenzten Zwischenraum in Richtung des Inneren des Kessels vor.

Das Trägerteil weist zwei sich parallel zueinander erstreckende Längsseiten auf. Diese Längsseiten verlaufen in Gebrauchslage der Korrosionssonde vorzugsweise parallel zur Erstreckungsrichtung der Rohre des Kesselwandabschnitts. Die beiden Querseiten, die die Längsseiten verbinden, können gerade oder gekrümmt verlaufen. Vorzugsweise sind die Elektroden bzw. die Elektrodenflächen vollständig innerhalb der Kontur der Außenfläche des Trägerteils angeordnet.

Die der Elektrodenfläche entgegengesetzte Rückseite jeder Elektrode ist mit einer Auswerteeinheit verbunden. Über die Auswerteeinheit kann beispielsweise zwischen zwei Elektroden eine Spannung angelegt und anhand einer Strommessung insbesondere über die Bestimmung des linearen Polarisationswiderstandes die Korrosion und/oder die Korrosionsrate des Kesselwandabschnitts ermittelt werden.

Die Auswerteeinheit ist insbesondere außerhalb des Kessels im Bereich der Kesselaußenseite des Kesselwandabschnitts angeordnet.

Die Breite des Trägerteils ist bei einem Ausführungsbeispiel maximal so groß wie die Breite des Verbindungsstegs, an dem das Trägerteil befestigt ist. Die Breite des Verbindungsstegs ist zumindest am betrachteten Kesselwandabschnitt konstant, so dass die Rohre parallel zueinander verlaufen können.

Vorzugsweise bestehen die Elektroden aus einem zum Verbindungssteg und/oder den Rohren des Kesselwandabschnitts artgleichen Werkstoff, insbesondere ein chromhaltigen Stahllegierung. Vorzugsweise bestehen alle Elektroden aus demselben Material.

Vorteilhafte Ausgestaltungen der Erfindung ergeben sich aus den abhängigen Patentansprüchen und der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung im Einzelnen erläutert.

Es zeigen:

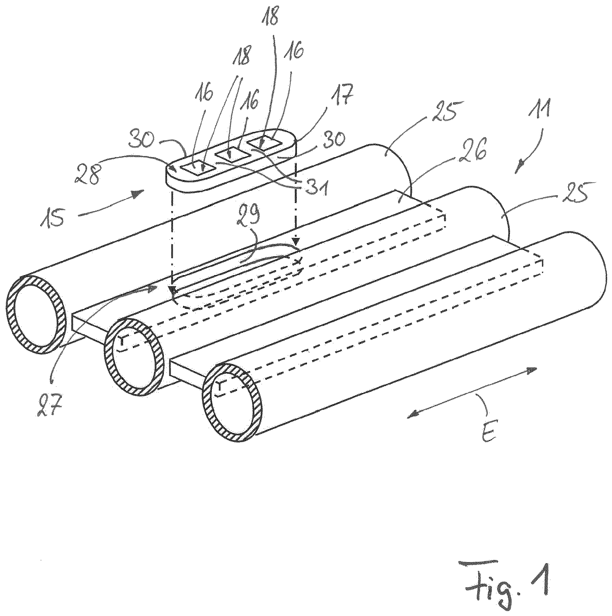

Figur 1 eine schematische perspektivische Darstellung einer Sensoranordnung einer Korrosionssonde und eines Kesselwandabschnitts mit einer Aussparung für die Sensoranordnung,
Figur 2 die Sensoranordnung in Gebrauchslage in Draufsicht auf die dem Kesselinneren zugeordneten Elektrodenflächen der Elektroden und
Figur 3 eine Vorrichtung aus Korrosionssonde und Kesselwandabschnitt in einer schematischen, blockschaltbildähnlichen Darstellung, wobei der Kesselwandabschnitt im Längsschnitt durch einen Verbindungssteg gemäß Schnittlinie III-III in Figur 2 veranschaulicht ist.

Die Erfindung betrifft eine Vorrichtung 12 mit einer Korrosionssonde 10 für einen Wandabschnitt und beispielsgemäß einen Kesselwandabschnitt 11, wobei die Vorrichtung 12 zur Bestimmung der Korrosion oder Korrosionsrate des Kesselwandabschnitts 11 eingerichtet ist. Die Vorrichtung 12 umfasst dabei die Korrosionssonde 10 und den Kesselwandabschnitt 11. Alternativ zum Beschriebenen Ausführungsbeispiel kann die Korrosionssonde auch bei einem Wärmetauscher verwendet werden, so dass die Vorrichtung 12 entsprechend den Wandabschnitt eines Wärmetauschers aufweisen kann.

Die Korrosionssonde 10 weist eine Sensoranordnung 15 mit mehreren Elektroden 16 sowie einem die Elektroden 16 tragenden Trägerteil 17 auf. Drei Elektroden 16 sind am Trägerteil 17 befestigt. Jede Elektrode 16 weist eine dem korrosiven Medium im Kesselinneren zugewandte Elektrodenfläche 18 auf. Auf der der Elektrodenfläche 18 entgegengesetzten Rückseite 19 sind die Elektroden 16 mit einer Auswerteeinheit 20 elektrisch verbunden.

Durch Anlegen einer Spannung an die Elektroden über die Auswerteeinheit 20 kann über die Methode der Bestimmung des linearen Polarisationswiderstandes (LPR) die Korrosion bzw. die Korrosionsrate an den Elektroden 16 über die Auswerteinheit 20 bestimmt werden. Dabei werden der Strom und die Spannung gemessen und über die Ermittlung des linearen Polarisationswiderstandes die Korrosionsrate und/oder die Korrosion bestimmt. Die Korrosion oder die Korrosionsrate an den Elektroden 16 ist ein Maß für die Korrosion bzw. Korrosionsrate am Kesselwandabschnitt 11 des Kessels. Beim Ausführungsbeispiel bestehen die Elektroden 16 aus einem artgleichen Werkstoff wie der Kesselwandabschnitt 11, so dass die Korrosion und die Korrosionsrate am Kesselwandabschnitt 11 der Korrosion bzw. der Korrosionsrate entspricht, die durch die Elektroden 16 erfasst wird.

Optional kann zusätzlich dazu auch das elektrochemische Rauschen zwischen zwei Elektroden 16 gemessen werden, um die Neigung am Wandabschnitt zur lokalen Korrosion zu bestimmen.

Eine Kesselwand eines Kessels, insbesondere eines Verdampfers weist typischerweise von einem zu erhitzenden bzw. zu verdampfenden Medium, insbesondere Wasser bzw. Wasserdampf durchströmte Rohre 25 auf, wobei zwei benachbarte Rohre 25 über einen Verbindungssteg 16 vorzugsweise gasdicht miteinander verbunden sind. Eine solche Kesselwand wird auch als Membranwand bezeichnet. Der betrachtete Kesselwandabschnitt 11 weist zwei in diesem Abschnitt parallel zueinander verlaufende Rohre 25 und einen dazwischen angeordneten quaderförmigen Verbindungssteg 26 auf. Die beiden Rohre 25 im betrachteten Kesselwandabschnitt 11 begrenzen einen Zwischenraum 27, in dem die Sensoranordnung 15 der Korrosionssonde 10 angeordnet ist. Die Sensoranordnung 15 befindet sich beim Ausführungsbeispiel vollständig im Zwischenraum 27. Der Zwischenraum 27 ist zum Inneren des Kessels und nach außen durch jeweils eine Ebene begrenzt, die an der Mantelfläche der beiden benachbarten Rohre 25 anliegt. Die Sensoranordnung 15 ragt aus dem Zwischenraum nicht zum Kesselinneren und vorzugsweise auch nicht zur Außenseite des Kessels hinaus.

Wie in den Figuren zu erkennen ist, sind die Elektroden 16 in Aufnahmen des Trägerteils 17 angeordnet. Die Elektroden 16 sind als Quader ausgeführt. Zumindest die Elektrodenfläche 18 ist stufenlos und kantenlos eben ausgeführt. Beim Ausführungsbeispiel befinden sich alle Elektrodenflächen 18 in derselben Ebene. Beispielsgemäß ist auch die Rückseite 19 der Elektroden 16 mit einer ebenen Fläche ausgeführt und die Elektroden bilden sozusagen ebene Platten. Die Aufnahmen für die Elektroden 16 im Trägerteil 17 sind an die Kontur der Elektroden 16 angepasst und ebenfalls quaderförmig. Die Elektroden 16 sind beim Ausführungsbeispiel im Wesentlichen vollständig vom Trägerteil 17 aufgenommen. Die Elektrodenflächen 18 der Elektroden haben eine rechteckförmige oder quadratische Kontur. Alle Elektroden 16 sind beim Ausführungsbeispiel in ihrer Form identisch. Alle Elektroden 16 sind insbesondere aus dem gleichen Material hergestellt.

Die Elektrodenflächen 18 befinden sich beim Ausführungsbeispiel in einer gemeinsamen Ebene mit der dem korrosiven Medium im Inneren des Kessels zugeordneten Außenfläche 28 des Trägerteils 17. Auf der dem Inneren des Kessels zugewandten Seite weist die Sensoranordnung 15 somit eine ebene Flachseite 18, 28 auf.

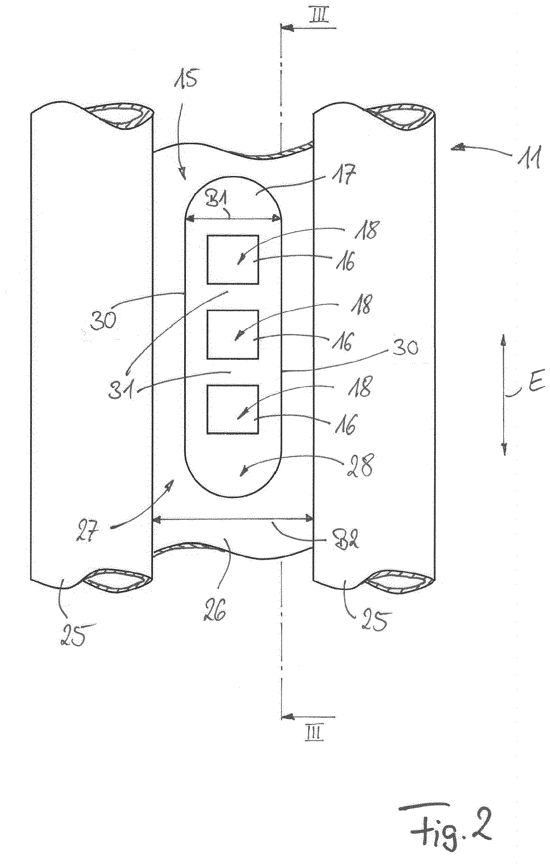

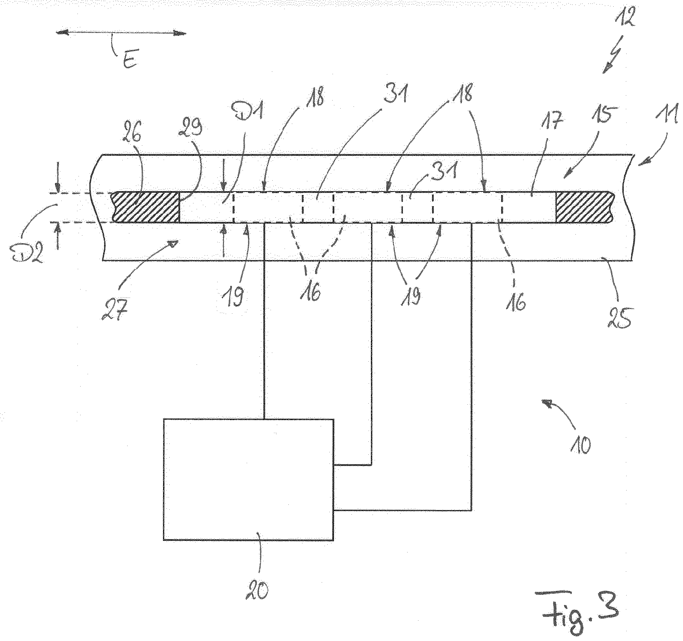

Zur Anordnung im Zwischenraum 27 ist beispielsgemäß in den Verbindungssteg 26, der sich ebenfalls im Zwischenraum 27 zwischen den beiden Rohren 25 befindet, eine Aussparung 29 eingebracht, die den Verbindungssteg 26 beim Ausführungsbeispiel vollständig durchsetzt. Die Aussparung 29 im Verbindungssteg 26 ist an die Kontur des Trägerteils 17 angepasst. Vorzugsweise entspricht die Dicke D1 des Trägerteils und/oder der Elektroden 16 der Dicke D2 des Verbindungsstegs 26 (Figur 3). Die Breite B1 des Trägerteils 17 ist vorzugsweise maximal so groß wie die Breite B2 des Verbindungsstegs zwischen den beiden Rohren 25 (Figur 2). Das Trägerteil 17 weist zwei in Erstreckungsrichtung E der Rohre 25 verlaufende Längskanten 30 auf, deren Abstand die Breite B1 des Trägerteils 17 bestimmt. Bei dem hier beschriebenen Ausführungsbeispiel ist die Breite B1 des Trägerteils 17 und mithin die Breite der Sensoranordnung 15 kleiner als die Breite B2 des Verbindungsstegs 26. Die Sensoranordnung 15 lässt sich somit problemlos in den Zwischenraum 27 zwischen den beiden Rohren 25 und beispielsgemäß in die Aussparung 29 einsetzen. Bei bisher bekanten Sensoranordnungen 15 bzw. Korrosionssonden 10 war es erforderlich, den Verlauf der Rohre 25 zu ändern, um ausreichend Platz für das Anordnen der Sensoranordnung 15 zu schaffen. Dies hat allerdings strömungstechnische und wärmetechnische Nachteile und führt zu einem erhöhten Montage- bzw. Fertigungsaufwand. Es ist gewünscht, dass die Rohre 25 möglichst parallel in Erstreckungsrichtung E durchströmt werden können.

Das Trägerteil 17 besteht aus einem elektrisch isolierenden Material. Es umschließt jede Elektrode 16 rahmenähnlich. Dadurch sind am Trägerteil 17 zwischen zwei benachbarten Aufnahmen für die Elektroden 16 Stege 31 gebildet, über die zwei unmittelbar benachbarte Elektroden 16 elektrisch voneinander getrennt sind. Die Elektroden 16 sind beim Ausführungsbeispiel in einer Reihe entlang einer Achse angeordnet, die parallel zur Erstreckungsrichtung E der beiden benachbarten Rohre 25 des Kesselwandabschnitts 11 ausgerichtet ist.

Das Trägerteil 17 besteht vorzugsweise aus einem einzigen einheitlichen Material und ist ohne Füge- oder Trennstellen einstückig hergestellt. Die Elektroden 16 sind in den Aufnahmen am Trägerteil 17 mit Abstand zueinander angeordnet und vorzugsweise stoffschlüssig und/oder kraftschlüssig und/oder formschlüssig mit dem Trägerteil 17 verbunden. Bei einem Ausführungsbeispiel können die Elektroden am Trägerteil 17 angeschraubt. Dadurch ist eine sehr einfach handhabbare Sensoranordnung 15 aus dem Trägerteil 17 und den Elektroden 16 gebildet. Dies kann bei Herstellung des Kesselwandabschnitts 11 sehr einfach in eine Aussparung 29 im Verbindungssteg 26 eingesetzt und dort gasdicht, beispielsweise stoffschlüssig und/oder kraftschlüssig und/oder formschlüssig befestigt werden, so dass die Sensoreinheit 15 vollständig innerhalb des Zwischenraums 27 zwischen den beiden Rohren 25 angeordnet ist. Durch diese Anordnung kann auf eine separate Kühlung der Sensoreinheit 15 und insbesondere der Elektroden 16 verzichtet werden. Die Korrosionssonde 10 ist daher frei von Kühlkanälen, Kühlleitungen oder dergleichen. Dadurch, dass das Trägerteil im Zwischenraum 27 und insbesondere in einer Aussparung 29 im Verbindungssteg 26 sitzt, ist die Wärmeabfuhr durch das durch die Rohre 25 strömende Medium ausreichend zur Kühlung der Sensoranordnung 15 mit den Elektroden 16. Separate Kühlmittel können deswegen entfallen. Somit reduzieren sich der Bauraumbedarf und der Herstellungsaufwand der Korrosionssonde 10 erheblich.

Auf der Außenseite des Kessels bzw. des Kesselwandabschnitts 11 werden die Elektroden 16 der Sensoranordnung 15 über elektrische Leitungen mit der Auswerteeinheit 20 verbunden. Die Auswerteeinheit 20 kann daher außerhalb des Kesselinnenraums und mithin unbeaufschlagt von korrosiven Medien angeordnet werden.

### Bezugszeichenliste:

- 10: Korrosionssonde
- 11: Kesselwandabschnitt
- 12: Vorrichtung

- 15: Sensoranordnung
- 16: Elektroden
- 17: Trägerteil
- 18: Elektrodenfläche
- 19: Rückseite
- 20: Auswerteeinheit

- 25: Rohr
- 26: Verbindungssteg
- 27: Zwischenraum
- 28: Außenfläche
- 29: Aussparung
- 30: Längskante
- 31: Steg

- B1: Breite des Trägerteils
- B2: Breite des Verbindungsstegs
- D1: Dicke des Trägerteils
- D2: Dicke des Verbindungsstegs
- E: Erstreckungsrichtung

## Patentansprüche

1. Vorrichtung (10) zur Korrosionsbestimmung,
mit einem Kessel oder einem Wärmetauseher, der zwei von einem zu erhitzenden Medium durchströmte Rohre (25) aufweist, wobei die benachbarten Rohre (25) über einen Verbindungssteg (26) miteinander verbunden sind,
mit einer Korrosionssonde (10), die eine Sensoranordnung (15) mit mehreren Elektroden (16) aufweist, die jeweils eine einem korrosiven Medium zugewandte ebene Elektrodenfläche (18) aufweisen und die mit dem korrosiven Medium in Kontakt zu bringen sind, zur elektrochemischen Bestimmung der Korrosion und/oder Korrosionsrate,
mit einer Auswerteeinheit (20), die außerhalb des Kessels oder des Wärmetauschers angeordnet ist,
und die mit jeder Elektrode (16) elektrisch verbunden ist, mit einem die Elektroden (16) aufweisenden isolierenden Trägerteil (17), das an oder im Verbindungssteg (26) zwischen zwei Rohren (25) des Wandabschnitts (11) befestigt ist,
**dadurch gekennzeichnet,**
**dass** drei Elektroden (16) vorhanden sind, die jeweils als ebene Platte mit einer rechteckförmigen Elektrodenfläche (18) ausgeführt sind und die nebeneinander im isolierenden Trägerteil (17) angeordnet sind,
und **dass** die Auswerteeinheit (20) dazu eingerichtet ist, eine Spannung an die Elektroden anzulegen und mittels der Methode der Bestimmung des linearen Polarisationswiderstandes (LPR) die Korrosion oder die Korrosionsrate an den Elektroden (16) zu bestimmen.

2. Vorrichtung nach Anspruch 1,
**dadurch gekennzeichnet, dass** die Breite (B1) des Trägerteils (17) maximal so groß ist wie die Breite (B2) des Verbindungsstegs (26).

3. Vorrichtung nach Anspruch 1 oder 2,
**dadurch gekennzeichnet, dass** die Elektroden (16) innerhalb der Kontur der der Innenseite des Kessels oder des Wärmetauschers zugewandten Außenfläche (28) des Trägerteils (17) angeordnet sind.

4. Vorrichtung nach einem der vorhergehenden Ansprüche, **dadurch gekennzeichnet, dass** die Sensoranordnung (15) zwischen zwei parallel zueinander verlaufenden Rohren angeordnet ist und nicht aus dem Zwischenraum (27) zwischen den Rohren (25) an der Innenseite des Kessels oder des Wärmetauschers herausragt.

5. Vorrichtung nach einem der vorhergehenden Ansprüche, **dadurch gekennzeichnet, dass** die Elektroden (16) aus einem artgleichen Werkstoff hergestellt sind wie der Verbindungssteg (26) und/oder die Rohre (25).

6. Vorrichtung nach einem der vorhergehenden Ansprüche, **dadurch gekennzeichnet, dass** die Korrosionssonde (10) kühlkanalfrei ausgeführt ist.

7. Vorrichtung nach einem der vorhergehenden Ansprüche, **dadurch gekennzeichnet, dass** zwei der Elektroden (16) der Korrosionssonde (10) durch einen dazwischen verlaufenden Steg (31) des Trägerteils (17) voneinander getrennt sind.

8. Vorrichtung nach Anspruch 7,
**dadurch gekennzeichnet, dass** die Elektrodenflächen (18) der Elektroden (16) in einer gemeinsamen Ebene mit der dem korrosiven Medium zugeordneten Außenfläche (28) des Trägerteils (17) angeordnet sind.

9. Vorrichtung nach einem der vorhergehenden Ansprüche, **dadurch gekennzeichnet, dass** das Trägerteil (17) der Korrosionssonde (10) zwei insbesondere parallele Längsseiten (30) aufweist, zwischen denen die Elektroden (16) angeordnet sind.

10. Vorrichtung nach einem der vorhergehenden Ansprüche, **dadurch gekennzeichnet, dass** eine der Elektrodenfläche (18) entgegengesetzten Rückseite (19) jeder Elektrode (16) ein mit einer Auswerteeinheit (20) verbunden ist.

11. Verwendung einer Vorrichtung nach einem der vorhergehenden Ansprüche, um die Korrosion oder die Korrosionsrate an den Elektroden (16) zu bestimmen.

## Claims

1. Device (10) for determining corrosion,
with a boiler or a heat exchanger which has two tubes (25) through which flows a medium to be heated, wherein the adjacent tubes (25) are connected together via a connecting web (26),
with a corrosion probe (10) which has a sensor arrangement (15) with a plurality of electrodes (16) that are each brought in contact with an electrode face (18) facing a corrosive medium and which are to be brought into contact with the corrosive medium for electrochemical determination of the corrosion and/or corrosion rate,
with an analysis unit (20) which is arranged outside the boiler or heat exchanger and which is electrically connected to each electrode (16),
with an insulating carrier part (17) holding the electrodes (16) and attached on or in the connecting web (26) between two tubes (25) of the wall portion (11), **characterised in that** three electrodes (16) are present which are each formed as a flat plate with a rectangular electrode face (18) and which are arranged next to each other in the insulating carrier part (17),
and that the analysis unit (20) is configured to apply a voltage to the electrodes and by means of the method for determining linear polarisation resistance (LPR), determine the corrosion or the corrosion rate at the electrodes (16).

2. Device according to claim 1, **characterised in that** the width (B1) of the carrier part (17) is at most as large as the width (B2) of the connecting web (26).

3. Device according to claim 1 or 2, **characterised in that** the electrodes (16) are arranged inside the contour of the outer face (28) of the carrier part (17) facing the inside of the boiler or heat exchanger.

4. Device according to any of the preceding claims, **characterised in that** the sensor arrangement (15) is arranged between two tubes running parallel to each other and does not protrude from the intermediate space (27) between the tubes (25) on the inside of the boiler or heat exchanger.

5. Device according to any of the preceding claims, **characterised in that** the electrodes (16) are made of a similar material as the connecting web (26) and/or the tubes (25).

6. Device according to any of the preceding claims, **characterised in that** the corrosion probe (10) is configured without cooling channels.

7. Device according to any of the preceding claims, **characterised in that** two of the electrodes (16) of the corrosion probe (10) are separated from each other by a web (31) of the carrier part (17) running between them.

8. Device according to claim 7, **characterised in that** the electrode faces (18) of the electrodes (16) are arranged in a common plane with the outer face (28) of the carrier part (17) assigned to the corrosive medium.

9. Device according to any of the preceding claims, **characterised in that** the carrier part (17) of the corrosion probe (10) has two in particular parallel longitudinal sides (30), between which the electrodes (16) are arranged.

10. Device according to any of the preceding claims, **characterised in that** a back side (19) of each electrode (16) opposite the electrode face (18) is connected to an analysis unit (20).

11. Use of a device according to any of the preceding claims to determine corrosion or the corrosion rate at the electrodes (16).

## Revendications

1. Dispositif (10) destiné à déterminer la corrosion,
comprenant une chaudière ou un échangeur de chaleur, qui présente deux tuyaux (25) traversés par un fluide à chauffer, les tuyaux (25) adjacents étant reliés l'un à l'autre par une entretoise (26),
comprenant une sonde de corrosion (10) qui présente un dispositif capteur (15) comportant plusieurs électrodes (16), lesquelles présentent chacune une surface d'électrode (18) plane tournée vers un fluide corrosif et qui doivent être amenées en contact avec le fluide corrosif en vue de la détermination électrochimique de la corrosion et/ou du taux de corrosion,
comprenant une unité d'évaluation (20) qui est disposée à l'extérieur de la chaudière ou de l'échangeur de chaleur et qui est reliée électriquement à chaque électrode (16),
comprenant un élément support (17) isolant, présentant les électrodes (16), qui est fixé sur ou dans l'entretoise (26) entre les deux tuyaux (25) de la partie de paroi (25),
**caractérisé en ce que**
trois électrodes (16) sont prévues, qui sont réalisées chacune comme plaque plane avec une surface d'électrode (18) rectangulaire et qui sont disposées les unes à côté des autres dans l'élément support (17) isolant,
et **en ce que** l'unité d'évaluation (20) est conçue pour appliquer une tension aux électrodes et pour déterminer la corrosion ou le taux de corrosion sur les électrodes (16), à l'aide de la méthode de la détermination de la résistance de polarisation linéaire (LPR).

2. Dispositif selon la revendication 1, **caractérisé en ce que** la largeur (B1) de l'élément support (17) est au maximum aussi grande que la largeur (B2) de l'entretoise (26).

3. Dispositif selon la revendication 1 ou 2, **caractérisé en ce que** les électrodes (16) sont disposées à l'intérieur du contour de la surface extérieure (28) de l'élément support (17) tournée vers la face interne de la chaudière ou de l'échangeur de chaleur.

4. Dispositif selon l'une des revendications précédentes, **caractérisé en ce que** le dispositif capteur (15) est placé entre deux tuyaux s'étendant parallèlement l'un à l'autre et ne dépasse pas de l'espace (27) entre les tuyaux (25) sur la face interne de la chaudière ou de l'échangeur de chaleur.

5. Dispositif selon l'une des revendications précédentes, **caractérisé en ce que** les électrodes (16) sont fabriquées à partir d'un matériau du même type que l'entretoise (26) et/ou les tuyaux (25).

6. Dispositif selon l'une des revendications précédentes, **caractérisé en ce que** la sonde de corrosion (10) est réalisée sans canal de refroidissement.

7. Dispositif selon l'une des revendications précédentes, **caractérisé en ce que** deux des électrodes (16) de la sonde de corrosion (10) sont séparées l'une de l'autre par un segment (31) de l'élément support (17) s'étendant entre elles.

8. Dispositif selon la revendication 7, **caractérisé en ce que** les surfaces d'électrode (18) des électrodes (16) sont disposées dans un plan commun avec la surface extérieure (28) de l'élément support (17) associée au fluide corrosif.

9. Dispositif selon l'une des revendications précédentes, **caractérisé en ce que** l'élément support (17) de la sonde de corrosion (10) présente deux côtés longitudinaux (30), notamment parallèles, entre lesquels sont disposées les électrodes (16).

10. Dispositif selon l'une des revendications précédentes, **caractérisé en ce qu'**une face arrière (19) de chaque électrode (16) qui est opposée à la surface d'électrode (18) est reliée à une unité d'évaluation (20).

11. Utilisation d'un dispositif selon l'une des revendications précédentes pour déterminer la corrosion ou le taux de corrosion sur les électrodes (16).
